Europäisches Patentamt

European Patent Office

Office européen des brevets

(19)

(11) Numéro de publication: **0 416 996 A1**

# DEMANDE DE BREVET EUROPEEN

(12)

(21) Numéro de dépôt: 90402437.9

(22) Date de dépôt: 04.09.90

(51) Int. Cl.⁵: **G01J 3/20**

(30) Priorité: 05.09.89 FR 8911607

(43) Date de publication de la demande:
**13.03.91 Bulletin 91/11**

(84) Etats contractants désignés:
**DE FR GB**

(71) Demandeur: **INSTRUMENTS S.A.**
**25, avenue de l'Opéra**
**F-75001 Paris(FR)**

(72) Inventeur: **Gautherin, Jean-Claude**
**4, rue Paul Roger**
**F-94370 Sucy en Brie(FR)**
Inventeur: **Zegre, Henri**
**6, rue de la Marnière**
**F-94370 Sucy en Brie(FR)**

(74) Mandataire: **Phélip, Bruno et al**
**c/o Cabinet Harlé & Phélip 21, rue de La**
**Rochefoucauld**
**F-75009 Paris(FR)**

(54) **Dispositif d'analyse par spectroscopie.**

(57) L'invention a pour objet un dispositif d'analyse par spectroscopie, comprenant une source de lumière, un analyseur de lumière comportant une fente d'entrée, un réseau de diffraction et au moins une fente de sortie disposés le long d'un cercle de Rowland, et un système de transmission optique.

Selon l'invention, le fente d'entrée (3) est montée déplaçable le long du cercle de Rowland (1), de part et d'autre d'une position centrale, le système de transmission optique comprend une première partie fixe (I) associée à la source de lumière (5; 8) et une seconde partie mobile (II) associée à la fente d'entrée (3) et montée déplaçable parallèlement à elle-même suivant une direction ($a_1$, $a_2$; $b_1$, $b_2$; $c_1$, $c_2$) parallèle à la tangente (T) au cercle de Rowland (1) à la position centre le de la fente d'entrée (3), et le dispositif comprend des moyens de commande de déplacement en synchronisme de le fente d'entrée (3) le long du cercle de Rowland (1) et de le partie mobile (II), parallèlement à la tangente (T), avec maintien de le direction de l'axe optique de l'ensemble.

EP 0 416 996 A1

La présente invention est du domaine de l'analyse par spectroscopie optique et s'applique spécialement à l'analyse de la partie utile d'une source de lumière par spectrométrie simultanée.

D'une façon générale, un appareil d'analyse par spectrométrie optique comprend une source de lumière dont on veut analyser une partie utile et un système analyseur de lumière qui peut être monochromateur ou polychromateur et qui comporte une fente d'entrée, un moyen de dispersion et au moins une fente de sortie dont la position dépend de la longueur d'onde de la lumière analysée et qui est associée à un détecteur, par exemple du type photo-multiplicateur ou photo-diodes.

L'analyse se fait en mesurant l'intensité des raies d'émission de l'échantillon aux différentes longueurs d'onde.

On connaît en particulier des spectographes simultanés à réseau dans lesquels la dispersion de la lumière est assurée par un réseau de diffraction concave, la fente d'entrée étant placée sur un cercle dit de Rowland qui est tangent à la surface concave sur laquelle est formé le réseau et qui a un diamètre égal au rayon de courbure de cette surface. Les faisceaux monochromatiques donnés par le réseau convergent en des points situés sur le cercle de Rowland et c'est donc sur ce cercle que sont placées les fentes de sortie permettant de sélectionner les longueurs d'onde choisies.

En règle générale, on utilise un montage optique constitué de miroirs ou lentilles et qui transmet la lumière utile de la source lumineuse dans le spectromètre travers la fente d'entrée et suivant l'axe passant par le centre du réseau et le centre de la fente, ceci en matérialisant l'image de la partie utile de la source de lumière sur la fente d'entrée du spectromètre.

De tels systèmes permettent une analyse assez ra pide car la mesure de l'intensité de toutes les raies se fait simultanément. Cependant, toutes les longueurs d'onde ne sont pas accessibles puisque l'on ne peut mesurer que celles qui correspondent à la position des fentes de sortie.

Une autre difficulté tient à la nature de la source de lumière que l'on doit analyser.

On distingue en effet, d'une part les sources à excitation directe où la totalité de la lumière émise est utile, et, d'autre part, les sources à transfert d'énergie où la lumière utile est perturbée par le milieu dans lequel elle est localisée, par exemple dans un plasma induit par haute fréquence. Afin d'effectuer des analyses de ce second type de source lumineuse dans les meilleures conditions, js convient que seule la lumière utile puisse être introduite dans le spectromètre.

On a vu que, avec les polychromateurs, seules sont accessibles les longueurs d'onde prévues initialement. Certes, on peut prévoir un déplacement des fentes de sortie pour se régler sur d'autres longueurs d'onde comme on l'a prévu par exemple dans le brevet européen N° 0083574 publié le 13 Juillet 1983 par la même société mais il s'agit là d'un déplacement en bloc de toutes les fentes qui ne peut se faire que sur une faible amplitude et donne une simple possibilité de réglage. Dans la mesure ou il faut conserver une très grande précision de positionnement des fentes de sortie sur le cercle de Rowland, il serait difficile de prévoir une possibilité de réglage individuel des fentes de sortie sans compliquer exagéremment l'installation.

On peut aussi envisager de déplacer la fente d'entrée de façon à accéder à d'autres longueurs d'onde en balayant le spectre. Cependant, dans ce cas, il se produit un désalignement de l'axe optique d'entrée du polychromateur avec l'axe de la reprise optique et de la source. Un tel désalignement ne peut donc, normalement, être toléré dans les cas où, comme on l'a indiqué précédemment, la lumière utile doit venir d'un endroit bien déterminé de la source.

L'invention a précisément pour objet de résoudre sun tel problème.

Sel on l'invention, en effet, on effectue un déplacement simultané de la fente d'entrée et d'une partie de la reprise optique sans modification de la direction de l'axe optique, ce qui permet de n'introduire dans le spectromètre que les rayons lumineux utiles comme si la fente d'entrée était fixe tout en rendant accessibles toute une plage de longueurs d'onde sans modification de la position des fentes de sortie.

L'invention s'applique donc, d'une façon générale, à un dispositif d'analyse par spectroscopie comprenant une source de lumière dont on veut analyser une partie utile, un analyseur de lumière comportant une fente d'entrée, un réseau de diffraction et au moins une fente de sortie associée à un détecteur, l'ensemble étant disposé le long d'un cercle de Rowland, et un système de transmission optique disposé suivant un axe optique passant par une partie utile de la source, la fente d'entrée et le centre du réseau, et associé à des moyens de sélection de la lumière utile.

Conformément à l'invention, la fente d'entrée est montée déplaçable le long du cercle de Rowland de part et d'autre d'une position centrale et le système de transmission optique comprend une première partie associée à la partie utile de la source de lumière et restant fixe pendant l'analyse et une seconde partie, mobile, associée à la fente d'entrée, et montée déplacable parallèlement à elle-même suivant une direction parallèle à la tangente au cercle de Rowland à la position centrale de la fente d'entrée, de part et d'autre d'une position moyenne pour la quelle l'axe optique de la partie mobile passe par ladite position centrale, et le dispositif comprend des moyens de commande de déplacement en synchronisme de la fente d'entrée le long du cercle de Rowland et de la partie mobile parallèlement à la tangente avec maintien de la fente d'entrée sur l'axe optique de l'ensemble.

Un tel ensemble forme, en effet, quel le que soit la position de la fente sur le cercle de Rowland, l'image de la même partie utile de la source sur la fente d'entrée et permet d'introduire dans le spectromètre les rayons lumineux provenant de la partie utile de la source tout en minimisant les rayons inutiles.

Dans un premier mode de réalisation, chaque partie du système de transmission optique est constituée par au moins une lentille, et la partie mobile comporte un diaphragme qui limite l'ouverture d'éclairement.

Dans un second mode de réalisation, les deux parties du système de transmission optique sont constituées chacune par un miroir concave, respectivement fixe et mobile, le miroir mobile étant associé à un diaphragme qui limite l'ouverture d'éclairement.

Selon une autre disposition avantageuse, des moyens de transfert de la lumière utile, par exemple une fibre optique ou un faisceau de fibres optiques sont interposées entre les deux parties respectivement fixe et mobile du système de transmission optique. Par exemple, la première partie du système de transmission optique est constituée par une première lentille fixe associée à la face d'entrée d'au moins une fibre optique tandis que la seconde partie du système de transmission optique est constituée par une seconde lentille mobile associée à l'extrémité de sortie de la même fibre optique.

Dans un mode de réalisation particulier de l'invention, les moyens de commande des déplacements en synchronisme de la fente d'entrée et de la partie mobile du système de transmission optique comprennent, d'une part un bras monté rotatif autour d'un axe passant par le centre du cercle de Rowland et perpendiculaire à son plan et à l'extrémité duquel est monté un élément portant la fente d'entrée et d'autre part, un élément de support de la partie mobile du système de transmission optique comprenant une partie montée coulissante dans une glissière parallèlement à la direction de la tangente au cercle de Rowland à la position centrale de la fente, le bras rotatif et l'élément de support étant reliés par un moyen de liaison susceptible de faire correspondre à toute rotation du bras déterminant un décalage de la fente perpendiculaire à la direction de l'axe optique d'entrée dans le collimateur, un déplacement correspondant de l'élément de support de la partie mobile sur sa glissière déterminant un décalage de même amplitude de l'axe optique en restant parallèle à lui-même et inversement.

Dans un mode de réalisation particulièrement avantageux, le moyen de liaison entre le bras rotatif et l'élément de support de la partie mobile est constitué par un bras déplaçable en translation sur une glissière fixe suivant une direction perpendiculaire à l'axe optique d'entrée dans le polychromateur et sur lequel sont ménagés deux épaulements plans rectifiés parallèles à l'axe optique, le bras rotatif et l'élément de support étant muni chacun d'un index associé à des moyens d'application dudit index sur l'épaulement correspondant dans les deux sens de déplacement du bras de liaison sur sa glissière.

D'autres avantages et caractéristiques de l'invention apparaîtront à la lecture de la description suivante de formes de réalisation non limitatives du dispositif d'analyse spectrométrique selon l'invention, en référence aux dessins annexés dans lesquels:

Les Figures 1, 2 et 3, sont des représentations schématiques, respectivement de trois formes de réalisation du dispositif de l'invention.

La Figure 4 est un schéma optique montrant les parcours du faisceau de lumière entrant dans le polychromateur selon les positions de la fente d'entrée.

La Figure 5 est une représentation schématique d'un mécanisme d'entraînement permettant le déplacement simultané de la fente et de la partie mobile.

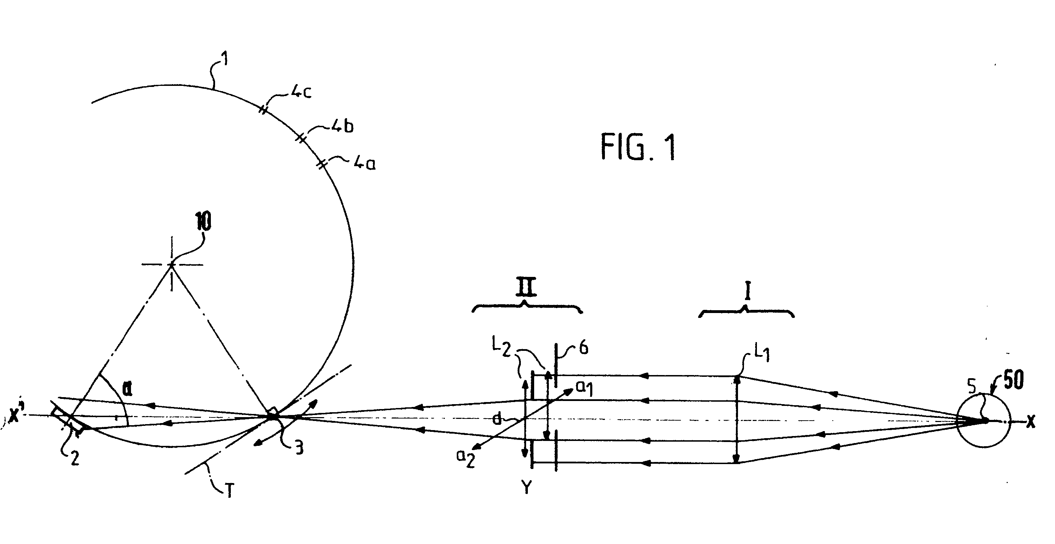

Sur la Figure 1, on a représenté schématiquement l'ensemble du dispositif comprenant le système de transmission de la lumière à analyser et le système analyseur.

L'analyseur de lumière est du type bien connu appliquant le montage dit de Rowland et n'a pas besoin d'être décrit en détail . On a donc représenté, sur la Figure uniquement le cercle de Rowland 1 sur lequel est placé le réseau de diffraction 2, une fente d'entrée 3 et une ou plusieurs fentes de sortie fixes 4 a , 4 b , 4 c .

Dans l'exemple représenté, la source de lumière à analyser est placée dans un plasma 50 induit par haute fréquence et pouvant avoir par exemple un diamètre de 15 à 20 mm sur une hauteur de 40 mm, la lumière à analyser étant localisée dans un volume 5 pouvant avoir un diamètre de 1 à 3 mm et quelques millimètres de hauteur.

Le système optique de transmission de la lumière est constitué par une première lentille $L_1$ de focale $f_1$ et une seconde lentille $L_2$ de focale $f_2$, le rapport des focales étant déterminé suivant le grandissement souhaité. Sur la Figure 1, la source de lumière 5 est placée au foyer objet de la lentille $L_1$ et la fente d'entrée 3 est placée au foyer image de la lentille $L_2$, les rayons étant donc parallèles à l'axe optique X'X entre les deux lentilles, mais cette disposition n'est pas obligatoire et il suffit que le faisceau émis par la source de lumière 5 soit transformé par le système optique en un faisceau convergeant sur la fente d'entrée 3. De même, chaque lentille $L_1$ et $L_2$ peut être constituée d'un assemblage de lentilles, le système optique comprenant, d'une façon générale, deux parties I et II. Au moins l'une de ces deux parties, par exemple la partie de sortie II comporte, un diaphragme 6 qui permet de limiter le diamètre utile de la lumière qui éclaire la fente d'entrée 3, ce diamètre utile étant calculé pour couvrir la totalité du réseau de diffraction 2.

La Figure 1 correspond à la disposition de départ du polychromateur pour lequel tous les éléments sont alignés suivant un axe X'X qui constitue l'axe optique du système de transmission optique et qui passe par la source de lumière 5, par la fente d'entrée 3 et par le centre du réseau 2. Dans cette position, le faisceau émis par la source 5 éclaire le réseau 2 suivant un angle d'incidence a et est diffracté en un certain nombre de faisceaux correspondant chacun à une longueur d'onde et qui converge en différents points 4 a , 4 b , 4 c du cercle de Rowland où sont placés les fentes de sortie associées chacune à un détecteur permettant de mesurer l'intensité de la raie correspondante. Pour un certain angle d'incidence a , chaque fente de sortie 4 a , 4 b , 4 c correspond donc à une longueur d'onde précise.

On voit bien sur la Figure que, pour modifier les longueurs d'onde ainsi mesurées ou bien effectuer un réglage de la longueur d'onde par exemple pour centrer la fente sur le sommet de la raie, il faut modifier la position, soit du réseau, soit des fentes de sortie, soit de la fente d'entrée 3. Or les deux premières solutions entraînent une certaine complication du dispositif si l'on veut conserver la précision nécessaire.

C'est pourquoi l'on préfère déplacer la fente d'entrée 3 de part et d'autre de la position centrale de façon à modifier l'angle d'incidence a . On peut ainsi faire converger sur l'une ou l'autre des fentes de sortie fixe des raies de longueurs d'onde différentes, celles-ci pouvant être calculées à partir de la position prise par la fente d'entrée.

Cependant, il apparait que, si la fente d'entrée 3 est déplacée par rapport à la position centrale se trouvant sur l'axe X'X, elle ne reçoit plus la lumière venant de la source ponctuelle 5.

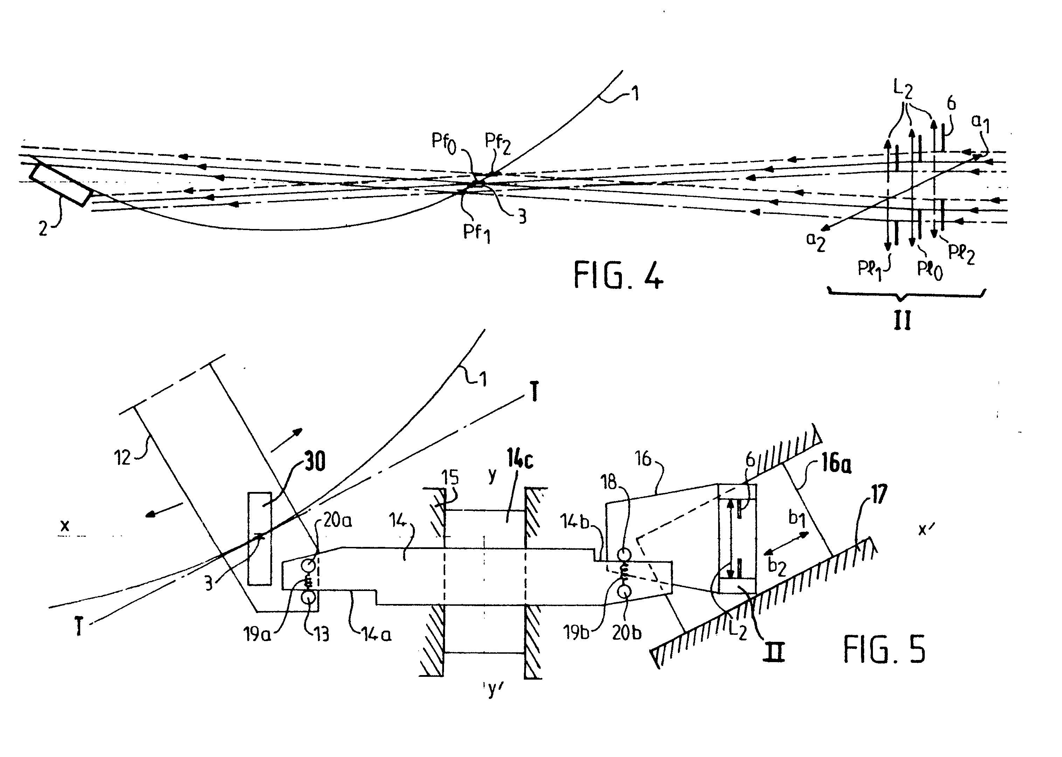

L'invention permet de résoudre ce problème en rendant mobile la partie de sortie II du système optique et en la déplaçant par translation suivant une direction $a_1$ $a_2$ parallèle à la tangente T au cercle de Rowland à la position centrale de la fente d'entrée 3. En effet, comme on l'a représenté sur la Figure 4, si le déplacement par rotation de la fente d'entrée 3 est faible par rapport au diamètre du cercle de Rowland 1 les distances sont conservées et la défocalisation par déplacement de la fente 3 qui passe de la position $Pf_0$ à l'une des position $Pf_1$ ou $Pf_2$, est compensée par le déplacement correspondant de la lentille $L_2$ qui passe elle-même de la position $Pl_0$ à l'une des positions $Pl_1$ ou $Pl_2$. Le diamètre utile de la lentille $L_2$, limité par le diaphragme 6, est calculé pour couvrir la totalité du réseau quelle que soit la position de la fente d'entrée. Le diamètre utile de la lentille d'entrée $L_1$ doit donc être égal au minimum au diamètre utile de $L_2$ limité par le diaphragme 6 auquel s'ajoute le décalage de la fente suivant la composante (Y) perpendiculaire à l'axe optique X'X.

Par ailleurs, les décalages de la fente d'entrée 3 et de la lentille $L_2$ suivant la composante (Y) doivent être rigoureusement de même amplitude par rapport à l'axe central X'X défini par l'alignement entre le centre du réseau 2, la position centrale de la fente 3, les centres des lentilles $L_2$ et $L_1$ et la zone utile de la source 5. Un dispositif permettant d'obtenir ce résultat est représenté, schématiquement à titre d'exemple, sur la Figure 5 et sera décrit plus loin.

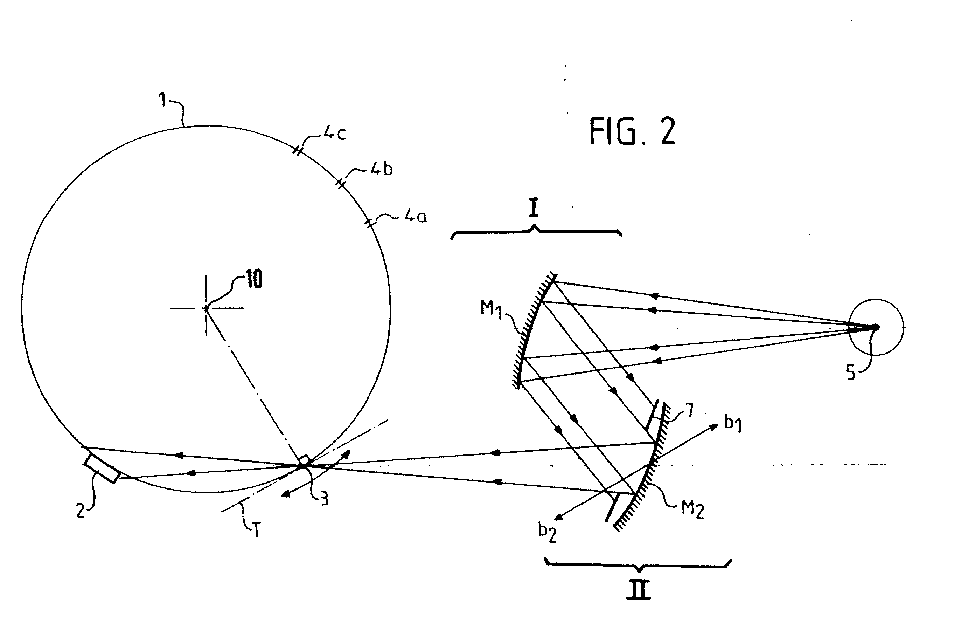

Dans la forme de réalisation représentée sur la Figure 2, on retrouve la même configuration des fentes de sortie 4 a , 4 b , 4 c et de la fente 3 sur le cercle de Rowland 1 défini à partir de son centre 0 et du réseau de diffraction 2, mais les lentilles $L_1$ et $L_2$ sont remplacées respectivement par des miroirs concaves $M_1$ et $M_2$. Ces miroirs $M_1$ et $M_2$, concaves, sont du type sphérique ou parabolique et ont des focales identiques ou bien dans un rapport déterminé en fonction du grandissement souhaité. Le miroir $M_1$ est fixe et solidaire de la source 5, tandis que le miroir $M_2$ peut se déplacer sur un axe $b_1$-$b_2$ qui est parallèle à la tangente T, au cercle de Rowland, au point milieu du déplacement de ladite fente d'entrée 3 sur le cercle de Rowland 1. La source 5 et la fente d'entrée 3 du polychromateur sont placées respectivement aux foyers des miroirs $M_1$ et $M_2$.

Le miroir $M_1$ transforme les rayons divergents de la zone utile de la source de plasma 5 en faisceaux parallèles, tandis que le miroir $M_2$ transforme ces rayons parallèles en un faisceau convergent sur la fente d'entrée afin d'y matérialiser l'image de la zone utile de la source de plasma 5. Dans ces conditions, quelle que soit la position de la fente d'entrée 3 sur le cercle de Rowland 1, le réseau 2 est éclairé par les rayons provenant de la même zone utile de la source 5, et la défocalisation par déplacement de la fente 3 est compensée par le déplacement du miroir $M_2$, comme spécifié ci-dessus.

Les dimensions utiles du miroir $M_2$ qui sont limitées par le diaphragme 7, sont calculées pour couvrir la totalité du réseau 2, quelle que soit la position de la fente d'entrée 3. Par ailleurs, les dimensions du miroir M₁ doivent être suffisantes pour que les rayons du faisceau parallèle viennent recouvrir entièrement le miroir M₂, quelle que soit la position de ce dernier dans ses déplacements, selon l'axe b₁-b₂. En outre, le déplacement de la fente d'entrée 3 et du miroir M₂ suivant la composante Y doit être rigoureusement de même amplitude, par rapport à l'axe central défini par l'alignement du réseau 2, de la fente 3 et du centre du miroir M₂, cet axe restant rigoureusement parallèle à l'axe passant par la source 5 de plasma et le centre du miroir M₁.

Dans les deux modes de réalisation qui viennent d'être décrits, le déplacement de la partie mobile II parallèlement elle-même ne détruit pas l'effet de collimation sur la fente d'entrée 3 du fait que celle-ci est placée sensiblement au foyer image de la partie mobile 11 alors que la source 5 est placée au foyer objet de la partie fixe 1. Une telle disposition n'est cependant pas indispensable, les caractéristiques des systèmes optiques permettant de réaliser autrement le déplacement d'une partie du système avec maintien de l'axe optique parallèlement à lui-même.

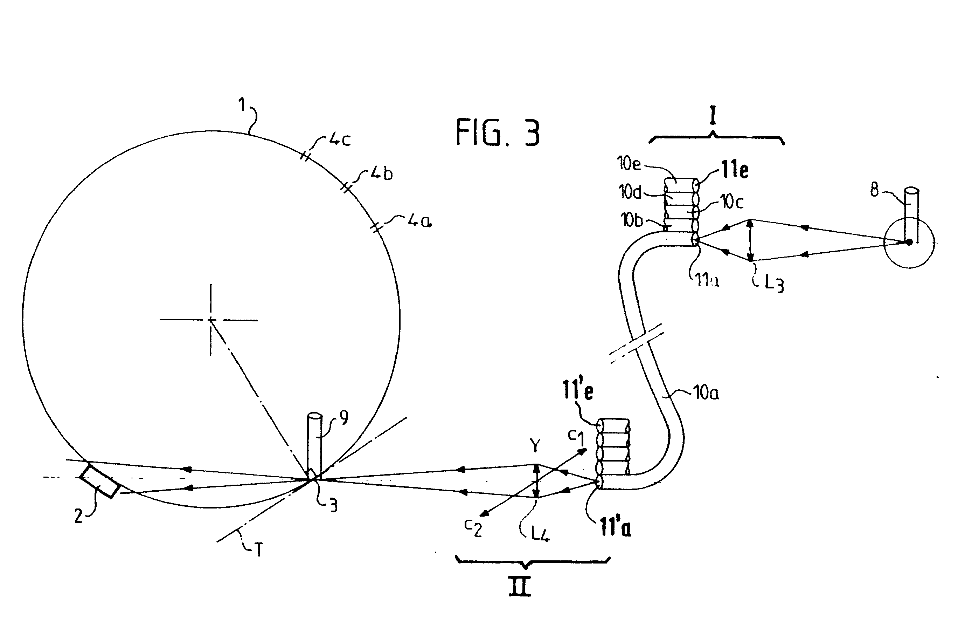

On peut, par exemple, utiliser une autre disposition particulièrement avantageuse représentée sur la Figure 3 et dans laquelle le transfert de la lumière entre la partie fixe I et la partie mobile II est effectué au moyen d'une ou plusieurs fibres optiques 10.

En effet, la partie utile à analyser de la source lumineuse n'est généralement pas ponctuelle et peut se présenter sous la forme d'un petit cylindre de plusieurs millimètrès de haut et qui est orienté de façon à être parallèle à la fente d'entrée 3 et aux fentes de sortie 4 a , 4 b , 4 c , c'est-à-dire perpendiculaire au plan du cercle de Rowland.

Dans ce cas, on utilisera avantageusement un faisceau de fibres optiques 10 a , 10 b , 10 c . . . . dont les faces d'entrée 11 et de sortie 11´ seront superposées suivant la même direction perpendiculaire au plan du cercle de Rowland.

La première partie 1 du système de transmission optique, représentée sur la Figure par la lentille L₃, matérialise l'image du cylindre 8 constituant la source lumineuse sur l'ensemble des faces d' entrée 11 a . . . . 11 e des fibres optiques 10 a . . . . 10 e . Cette image est transmise par l'ensemble des fibres optiques jusqu'aux extrémités 11´ a . . . 11´e à partir desquelles elle est matérialisée en 9 sur la fente d'entrée 3 par la lentille L₄ constituant la partie mobile II du système optique.

La souplesse des fibres optiques permet donc de déplacer la partie mobile II avec les extrémités de sortie II´a à II´e parallèlement à la tangente T au cercle de Rowland et en conservant la direction de l'axe optique.

Comme précédemment, le déplacement de la fente d'entrée 3 et de l'ensemble constitué par la lentille L4 et l'extrémité de sortie 11 b de la fibre optique 10 a suivant la composante Y doit être rigoureusement de même amplitude par rapport à l'axe central défini par l'alignement du réseau 2, de la fente d'entrée 3, du centre de la lentille L4 et du centre de la fibre optique 10 a .

En résumé, alors que le déplacemnet de la fente d'entrée 3 sur le cercle de Rowland 1 permet de conserver la focale du spectromètre, le déplacement associé de la lentille II, tel qu'on vient de le décrire, permet de conserver l'alignement du spectromètre devant la partie utile 5 de la source et ceci, même pour des amplitudes de déplacement de la fente d'entrée 3 de plusieurs millimètres, voire plusieurs dizaines de millimètres, sans que ce déplacement affecte d'une façon sensible les caractéristiques des raies d'émission à analyser.

Ainsi, dans le cas d'un polychromateur de 500 mm de focale équipé d'un réseau 3600 T/mm, pour un déplacement de ± 8 mm correspondant à un balayage en longeur d'onde de ± 2,2 mm, le signal des raies à analyser et conservé et le rapport signal/fond est maintenu. De ce fait, les limites de détection propres à la raie d'émission sont conservées.

Sur la Figure 5, on a représenté, à titre d'exemple, un système mécanique permettant de lier le déplacement de la fente d'entrée 3 au déplacement de la partie mobile 2, et inversement, en conservant la même amplitude du décalage latéral suivant la direction Y´Y perpendiculaire à l'axe optique X´X.

Le dispositif représenté peut s'adapter indifféremment auz trois formes de réalisation prévues sur les Figures 1, 2 et 3.

La fente d'entrée 3 est ménagée sur un support 30 qui est monté à l'extrémité d'un bras monté rotatif autour de l'axe 10 passant par le centre du cercle de Rowland 1 et perpendiculaire à son plan. Une rotation du bras 12, par exemple au moyen d'un moteur non repésenté, permet donc de déplacer la fente 3 le long du cercle 1 de part et d'autre d'une position centrale.

Par ailleurs, la partie mobile 2 du système optique, par exemple la lentille L2 associée au diaphragme 6, est montée sur un élément de support 16 qui est fixé sur une pièce 16 a montée sur un élément de support 16 qui est fixé sur une pièce 16 a montée coulissante en translation le long d'une glissière 17 définissant un axe de translation b1 b2 parallèle à la tangente T au cercle de Rowland au point central de déplacement de la fente 3.

Entre le bras rotatif 12 et l'élément de support 16 est placé un bras de liaison 14 qui est lui-même monté sur une pièce 14 c pouvant coulisser le long d'une glissière 15 suivant une direction Y′Y perpendiculaire à l'axe optique X′X′ du polychromateur. Le bras 14 s'étend entre les deux pièces 12 et 16 et est muni, au niveau de chacune d'elles, de deux épaulements, respectivement 14a, 14b qui sont réctifiés de façon à définir chacun un plan perpendiculaire au plan du cercle de Rowland et parallèle à l'axe optique X′X.

Le bras rotatif 12 est muni d'un index 13 qui est appliqué contre l'épaulement plan 14 a par exemple par un ressort 19 a accroché à un tenon 20 a .

De la même façon, l'élement coulissant 16 est muni d'un index 18 qui est appliqué contre l'épaulement plan 14b par un ressort 19 accroché à un tenon 20 b .

Dans ces conditions, tout déplacement par rotation du bras 12 autour de son axe déterminé, par l'intermédiaire de l'index 13, un déplacement correspondant du bras 14 qui commande à son tour, par l'intermédiaire de l'épaulement 14 b et du tenon 18, un déplacement par translation de l'élement de support 16 correspondant à un décalage latéral de même amplitude selon la direction Y′Y. Inversement, un déplacement de l'élément coulissant 16 déterminerait une rotation du bras 12 correspondant à un décalage latéral de même amplitude parallèlement à la direction Y′Y. On peut donc agir, pour le réglage de la longueur d'onde détectée, soit sur la fente d'entrée 3, par l'intermédiaire du bras rotatif 12, soit sur la position de la partie mobile 2 du système optique.

Bien entendu, l'invention ne se limite pas aux détails des différents modes de réalisation qui viennent d'être décrits, d'autres dispositions équivalentes pouvant être imaginées en faisant appel à d'autres arrangements optiques ou mécaniques permettant d'une façon générale, de former l'image de la même partie utile de la source sur la fente d'entrée afin d'introduire dans le spectromètre les rayons lumineux provenant de la partie utile de la source en minimisant les rayons inutiles et ceci quelle que soit la position de la fente d'entrée sur le cercle de Rowland.

C'est ainsi que les déplacements synchronisés de la fente d'entrée et du système optique pourraient être commandés par des moteurs agit séparément sur le bras rotatif 12 et sur l'élément coulissant 16 et reliés ensemble par un moyen de synchronisation de type connu.

Par ailleurs, l'invention a été décrite dans le cas où l'on analyse une même partie utile de la source lumineuse, la première partie I du dispositif optique d'entrée étant fixe. Mais le dispositif peut aussi être employé, le cas échéant, pour l'analyse d'une source possédant plusieurs parties utiles. Dans ce cas, la partie I du dispositif optique pourrait être déplacée suivant un plan perpendiculaire à l'axe optique de façon à prélever successivement des rayons provenant des différentes parties utiles de la pour les analyser, ladite partie I restant fixe pendant l'analyse de la partie utile choisie.

Par exemple, dans le cas des analyses par Plasma à couplage inductif (ICP), la hauteur d'émission varie en fonction des raies et des éléments. Le déplacement vertical de la première partie I (lentille, miroir ou dispositif à fibres) permettrait un prélèvement optimal des signaux d'analyse pour chacun des éléments.

Ainsi se trouve résolu, grâce à l'invention le problème de l'accès à toute une plage de longueurs d'onde d'une ou plusieurs parties utiles d'une source de lumière grâce à un déplacement de la fente d'entrée du polychromateur, les fentes de sortie étant fixes, en introduisant uniquement dans l'analyseur de lumière les rayons lumineux utiles provenant de la partie utile la source à analyser et en minimisant les autres de la façon que si la fente d'entrée du polychromateur était restée fixe.

Il est ainsi possible, avec un nombre réduit de détecteurs, de couvre tous les élèments à analyser contenus dans une source. A partir d'un polychromateur ayant un nombre de lignes réduit, l'invention permet d'augmenter le nombre de lignes analysées.

L'invention facilite également l'analyse quantitative d'un échantillon car il est possible, par un petit balayage, d'accéder très rapidement à toutes les raies en utilisant le minimum d'échantillons, ce qui est particulièrement intéressant en biologie.

## Revendications

1. Dispositif d'analyse par spectrométrie, comprenant une source de lumière dont on veut analyser une partie utile, un analyseur de lumière comportant une fente d'entrée, un réseau de diffraction et au moins une fente de sortie associée à un détecteur, l'ensemble étant disposé le long d'un cercle de Rowland, et un système de transmission optique, disposé suivant un axe optique passant par une partie utile de la source, la fente d'entrée et le centre du réseau et associés à des moyens de sélection de la lumière utile, caractérisé par le fait que la fente d'entrée (3) est montée déplaçable le long du cercle de Rowland ( 1 ), de part et d'autre d'une position centrale, que le système de transmission optique comprend une première partie (I) associée à la partie utile de la source de lumière (5,8) et restant fixe pendant l'analyse de la dite partie utile et une seconde partie mobile (II) associée à la fente d'entrée (3) et montée déplaçable parallèlement à elle-même suivant une direction

($a_1$, $a_2$; $b_1$, $b_2$; $c_1$, $c_2$) parallèle à la tangente (T) au cercle de Rowland (1) à la position centrale de la fente d'entrée (3), de part et d'autre d'une position moyenne pour laquelle l'axe optique de ladite partie mobile (II) passe par ladite position centrale, et que le dispositif comprend des moyens de commande de déplacements en synchronisme de la fente d'entrée (3) le long du cercle de Rowland (1) et de la partie mobile (II), paral lèlement à la tangente (T) avec maintien de la direction parallèlement à elle-même.

2. Dispositif d'analyse par spectrométrie selon la revendication 1, caractérisé en ce que la partie fixe (I) et la partie mobile (II) du système de transmission optique sont constituées respectivement par au moins une lentille, respectivement fixe ($L_1$) et mobile ($L_2$) la lentille mobile ($L_2$) étant associée à un diaphragme (6) pour l'isolement de la partie utile à la lumière.

3. Dispositif d'analyse par spectrométrie selon la revendication 1, caractérisé par le fait que les deux par ties du système de transmission optique sont constituées respectivement par deux miroirs concaves respectivement fixe ($M_1$) et mobile ($M_2$), au moins le miroir mobile ($M_2$) étant associé un diaphragme (7).

4. Dispositif d'analyse par spectrométrie selon la revendication 3, caractérisé en ce que les miroirs concaves sont choisis parmi les miroirs concaves sphériques ou paraboliques.

5. Dispositif d'analyse spectrométrique selon la revendication 1, caractérisé en ce que, entre la première partie fixe du système de transmission optique ($L_3$, 11 a ) et la seconde partie mobile ($L_4$, 11 b ) du système de transmission optique sont prévus des moyens de transfert de la lumière utile, par exemple une fibre optique ou un faisceau de fibres optiques (10 a , 10 b , 10 c , 10 d , 10 e ).

6. Dispositif d'analyse par spectrométrie selon l'une quelconque des revendications 1 à 5, caractérisé en ce que la première partie du système de transmission optique est constituée par une première lentille fixe ($L_3$) associée à la face d'entrée (11 a ) d'au moins une fibre optique (10 a ) tandis que la seconde partie du système de transmission optique est constituée par une seconde lentille mobile ($L_4$) associée à l'extrémité de sortie (11 b ) de ladite fibre optique (10 a ).

7. Dispositif d'analyse selon l'une des revendicationa précédentes, caractérisé en ce que les moyens de commande des déplacements en synchronisme de la fente d'entrée (3) et de la partie mobile (II) du système de transmission comprennent:

- un bras (12) monté rotatif autour d'un axe (10) passant par le centre du cercle de Rowland et perpendiculaire à son plan et à l'extrémité duquel est monté un élément (30) portant la fente d'entrée (3),

- un élément (16) de support de la partie mobile (II) du système de transmission optique, comprenant une par tie (16a) montée coulissante dans une glissière (17) parallèlement à la direction de la tangente au cercle de Rowland à la position centrale de la fente (3).

- un moyen (14) de liaison entre le bras rotatif (12) et l'élément de support (16) faisant correspondre à toute rotation du bras (12) déterminant un déplacement de la fente (3), perpendiculaire à la direction à l'axe optique (X'X) d'entrée dans le polychromateur un déplacement correspondant de l'élément (16) de support de la partie mobile (II) sur sa glissière déterminant un déplacement de même amplitude de l'axe optique (X'X) parallèlement à lui-même, et inversement.

8. Dispositif d'analyse selon la revendication 7, caractérisé en ce que le moyen de liaison (14) est constitué d'un bras (14) déplaçable en translation sur une glissière (15) suivant une direction (Y'Y) perpendiculaire à l'axe optique (X'X) d'entrée, dans le polychromateur et sur lequel sont ménagés deux épaulemants plans rectifiés (14 a , 14 b ) parallèles à l'axe optique (X'X), le bras rotatif (12) et l'élément de support (16) étant munis chacun d'un index, respectivement (13) et (18) et associés à des moyens, respectivement (19 a , 20 a ) (19 b , 20 b ) d'application de chaque index (13) (18) sur l'épaulement correspondant (14 a ) (14 b ) dans les deux sens de déplacement du bras de liaison (14) sur sa glissière (15).

9. Dispositif d'analyse selon la revendication 8, caractérisé en ce que les moyens d'application des deux index (13) (18) sont des ressorts (19 a ) (19 b ) sollicitant constamment en appui chaque index (13; 18) respectivement contre l'épaulement (14 a ) (14 b ) correspondant du bras (14).

10. Dispositif d'analyse selon la revendication 7, caractérisé en ce qu'il comprend deux moteurs de commande, respectivement de la rotation du bras (12) et de la translation de l'élément (16) et un moyen de synchronisation des deux moteurs déterminant des déplacements de même amplitude perpendiculairement à l'axe optique (X'X).

11. Dispositif d'analyse selon l'une des revendications précédentes, caractérisé par le fait que le déplacement de la fente d'entrée (3) le long du cercle de Rowland, ainsi que le déplacement correspondant de la partie mobile II, peuvent atteindre plusieurs dizaines de millimètres.

12. Dispositif d'analyse selon l'une quelconque des revendications précédentes, caractérisé par le fait que, dans le cas d'une source de lumière comportant plusieurs parties utiles, la première partie (I) peut être déplacée dans un plan perpendiculaire à l'axe optique de façon à prélever des rayons provenant d'une autre partie utile, ladite première partie (I) restant fixe pendant l'analyse de la partie

utile choisie.

FIG. 1

EP 0 416 996 A1

FIG. 2

1

4c

4b

4a

10

I

M₁

5

7

b₁

2

3

T

b₂

M₂

II

EP 0 416 996 A1

FIG. 3

EP 0 416 996 A1

FIG. 4

FIG. 5

$L_2$   6   $a_1$

$Pf_0$   $Pf_2$

$Pf_1$   3

$a_2$

$Pl_1$   $Pl_0$   $Pl_2$

II

1

2

12

30

14c

15   y

14

14b

16   6   16a

18

17

x

x'

20a

3

19a   13   14a

'y'

19b   20b

$b_1$

$b_2$

$L_2$

II

T

T

**Office européen
des brevets**

**RAPPORT DE RECHERCHE
EUROPEENNE**

Numéro de la demande

**EP 90 40 2437**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 504 264  (ARL)<br>* Pages 2-3,5-7 *<br><br>— — — | 1 | G 01 J 3/20 |
| A,D | EP-A-0 083 574  (INSTRUMENTS S.A.)<br>* Page 2 *<br><br>— — — — — | | |

|  |
|---|
| **DOMAINES TECHNIQUES RECHERCHES (Int. Cl.5)** |
| G 01 J 3/18<br>G 01 J 3/06<br>G 01 J 3/20<br>G 01 J 3/02<br>G 01 J 3/04 |

Le présent rapport de recherche a été établi pour toutes les revendications

| Lieu de la recherche | Date d'achèvement de la recherche | Examinateur |
|---|---|---|
| La Haye | 10 décembre 90 | BOEHM CH.E.D. |

CATEGORIE DES DOCUMENTS CITES
X : particulièrement pertinent à lui seul
Y : particulièrement pertinent en combinaison avec un
    autre document de la même catégorie
A : arrière-plan technologique
O : divulgation non-écrite
P : document intercalaire
T : théorie ou principe à la base de l'invention

E : document de brevet antérieur, mais publié à la
    date de dépôt ou après cette date
D : cité dans la demande
L : cité pour d'autres raisons

    .......................................................................................

& : membre de la même famille, document
    correspondant